# FASCICULE DE BREVET EUROPEEN

(11) **EP 2 847 845 B1**
(45) Date de publication et mention de la délivrance du brevet: **04.07.2018**
(21) Numéro de dépôt: 13727264.7
(22) Date de dépôt: 06.05.2013
(51) Int. Cl.: H02J 3/38, H02J 5/00, B64D 31/02

(54) **SYSTEME DE COMMANDE ET D'ALIMENTATION EN ENERGIE DES TURBOMACHINES D'UN HELICOPTERE**
SYSTEM ZUR STEUERUNG UND STROMVERSORGUNG VON TURBOMASCHINEN EINES HUBSCHRAUBERS
SYSTEM FOR CONTROL AND POWER SUPPLY OF TURBOMACHINES OF A HELICOPTER

(30) Priorité: 11.05.2012 FR 1254333
(43) Date de publication de la demande: 18.03.2015
(73) Titulaire: Safran Electrical & Power, 31702 Blagnac Cedex (FR)
(72) Inventeur: VIEILLARD, Sébastien, 77720 La Chapelle Gauthier (FR)
(74) Mandataire: David, Alain
(86) Numéro de dépôt international: PCT/FR2013/051007
(87) Numéro de publication internationale: WO 2013/167837

(56) Documents cités:
- EP-A2- 2 404 775
- WO-A2-2009/125007
- FR-A1- 2 967 847
- US-A1- 2010 193 630
- US-A1- 2011 273 011

## Description

### Arrière-plan de l'invention

L'invention concerne le domaine de l'hybridation électrique de la propulsion des hélicoptères et autres giravions comportant au moins un rotor principal muni de pales et plus particulièrement elle se rapporte à un système de commande et d'alimentation en énergie d'au moins un moteur électrique couplé à la turbomachine ou à la boite de transmission principale (BTP) du giravion.

Dans un tel giravion, la boite de transmission principale relie un arbre de sortie de la turbomachine à l'arbre du rotor principal muni de pales via un réducteur de vitesse. En outre, un groupe auxiliaire de puissance ou APU ("Auxiliary Power Unit") fournit notamment l'énergie de bord lorsque les moteurs du giravion sont à l'arrêt, notamment au sol avant leur mise en rotation.

L'APU se présente sous la forme d'une turbomachine entraînant un générateur électrique. Ce dernier peut être conçu comme démarreur/générateur ou S/G ("Starter/Generator") qui fonctionne en mode moteur pour assurer le démarrage de l'APU et en mode générateur électrique après allumage de la turbomachine et lorsque celle-ci a atteint une vitesse de rotation suffisante. En mode de fonctionnement moteur, le S/G est alimenté en tension multiphasée. Il est bien connu à cet effet d'utiliser un dispositif convertisseur continu/alternatif à onduleurs qui transforme en tensions alternatives une tension continue fournie à partir d'une batterie via un convertisseur continu/continu élévateur de tension.

Des systèmes d'alimentation électrique d'aéronefs comportant de telles APUs sont par exemple divulgués dans les demandes de brevets US20110273011 et EP2404775.

Une forte tendance actuelle est de remplacer l'énergie hydraulique ou pneumatique par l'énergie électrique pour assurer le fonctionnement des différents systèmes de l'avion. Outre une simplification de la maintenance, des avantages en termes de diminution de masse et d'encombrement et de réduction de coûts peuvent être recherchés.

### Objet et résumé de l'invention

La présente invention s'inscrit dans cette démarche et propose à cet effet un système de commande et d'alimentation électrique d'au moins un moteur/générateur d'hélicoptère comprenant un premier convertisseur DC/AC destiné à fournir sélectivement, selon les positions respectives de contacteurs d'une matrice de connexion actionnés depuis un circuit de commande électronique, une énergie électrique alternative audit au moins un moteur/générateur, ce premier convertisseur DC/AC étant alimenté en tension continue par un dispositif d'alimentation en tension délivrant une tension continue Vdc et formé soit par un circuit de redressement d'une tension alternative délivrée via un contacteur par un démarreur/générateur d'un APU soit par un convertisseur DC/DC élévateur de tension alimenté à partir d'une batterie via un contacteur, ladite matrice de connexion comportant en outre un contacteur pour mettre en parallèle ledit premier convertisseur DC/AC avec ledit second convertisseur DC/AC afin de permettre, une fois l'un au moins desdits moteurs/générateurs démarrés, une injection de puissance supplémentaire à partir dudit démarreur/générateur de l'APU.

La mise à disposition d'une même ressource électrique entre deux systèmes, à savoir le démarreur/générateur de l'APU et les moteurs/générateurs de la BTP ou des turbomachines, qui ne fonctionnent pas en même temps et requièrent sensiblement le même niveau de puissance électrique, est particulièrement avantageuse en ce qu'il se traduit, sans surdimensionnement du dispositif d'alimentation commun, par une réduction du nombre de boîtiers, de harnais et d'interfaces, donc une diminution de masse, d'encombrement et de coûts.

Avantageusement, ledit convertisseur DC/DC élévateur de tension est obtenu par la mise en série d'une inductance triphasée et d'un second convertisseur DC/AC via au moins un contacteur.

Un tel agencement dans lequel le dispositif convertisseur DC/AC transforme également en tension alternative une tension continue fournie à partir d'une batterie via une inductance triphasée permet le démarrage de l'APU.

De préférence, ladite matrice de connexion comporte au moins un contacteur pour relier ledit premier convertisseur DC/AC à un premier moteur/générateur et au moins un contacteur pour relier ledit second convertisseur DC/AC à un second moteur/générateur.

### Brève description des dessins

L'invention sera mieux comprise à la lecture de la description faite ci-après à titre indicatif mais non limitatif en référence à la figure unique illustrant un schéma de principe d'un mode de réalisation d'un système de commande et d'alimentation électrique selon l'invention.

### Description détaillée de modes de réalisation de l'invention

Un hélicoptère et plus généralement un giravion comporte au moins un rotor principal muni de pales dont la rotation permet sa sustentation et son déplacement. Ce rotor principal est entrainé par une ou plusieurs turbomachines au travers d'un mécanisme de transmission et réduction de vitesse connu sous l'appellation de boîte de transmission principale (BTP).

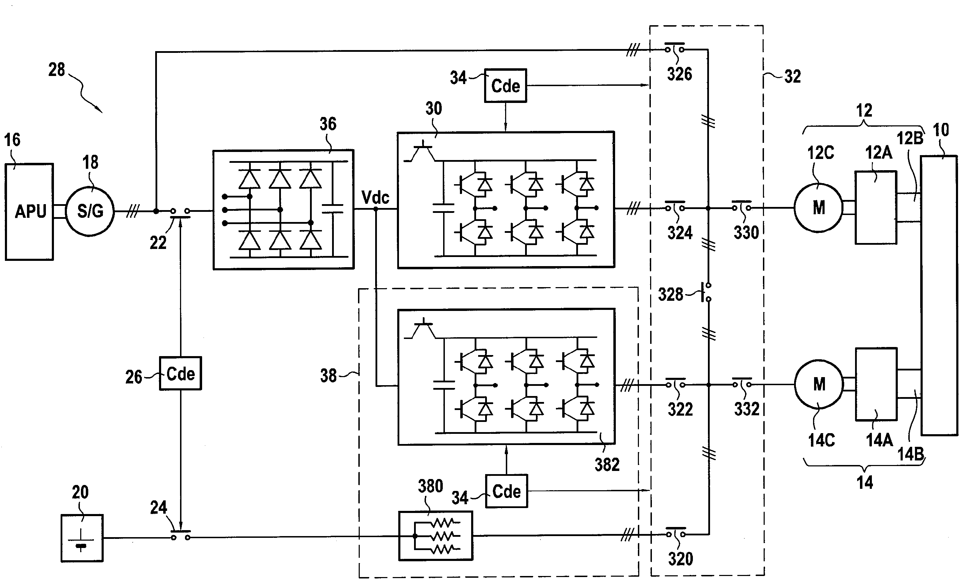

La figure 1 montre une BTP 10 en prise avec respectivement deux turbomachines 12, 14 comportant chacune un générateur de gaz 12A, 14A, une turbine libre 12B, 14B entrainée par le flux de gaz généré par le générateur de gaz et une machine électrique réversible 12C, 14C constituée d'un moteur électrique apte à fonctionner en génératrice électrique et couplée mécaniquement au générateur de gaz. Sur cette figure, la référence 16 désigne un générateur auxiliaire de puissance (ou APU pour Auxiliary Power Unit) auquel est couplée mécaniquement une machine électrique 18 formant démarreur/générateur (ou S/G pour Startor/Generator) et la référence 20 une batterie. Le démarreur/générateur 18 délivre typiquement une tension triphasée de 115Vac via un contacteur 22 et la batterie 20 une tension continue de 28Vdc via un contacteur 24, toutes deux tensions usuelles en matière aéronautique, sous la commande d'une unité de commande 26.

Selon l'invention, le système 28 de commande et d'alimentation électrique des moteurs/générateurs 12C, 14C de l'hélicoptère comprend un premier convertisseur DC/AC 30 destiné à fournir sélectivement, selon les positions de contacteurs 320, 322, 324, 326, 328, 330 d'une matrice de connexion 32 actionnés depuis un circuit de commande électronique 34, une énergie électrique alternative aux moteurs/générateurs, ce premier convertisseur DC/AC étant alimenté en tension continue par un dispositif d'alimentation délivrant une tension continue Vdc et formé soit par un circuit 36 de redressement à diodes (redresseur non commandé) d'une tension alternative délivrée par le démarreur/générateur 18 soit par un convertisseur DC/DC élévateur de tension 38 alimenté à partir de la batterie 20.

Le premier convertisseur DC/AC 30 est constitué par un onduleur à 3 phases (donc avec 6 commutateurs) précédé éventuellement, comme illustré, par un dispositif de protection comportant un interrupteur commandé suivi d'un condensateur en parallèle. Les commutateurs formant l'onduleur sont communément des IGBT aux bornes desquels sont montées des diodes antiparallèles et dont la commutation est assurée par le circuit de commande électronique 34.

Le circuit de redressement non commandé 36 est avantageusement constitué par un pont de diodes triphasé délivrant aux bornes d'un condensateur une tension redressée et filtrée de 270Vdc qui est une tension usuelle dans le domaine aéronautique.

Le convertisseur DC/DC élévateur de tension 38 est constitué par la mise en série via la matrice de connexion 32 d'une inductance triphasée 380 et d'un second convertisseur DC/AC 382. A l'image du premier convertisseur, ce second convertisseur est également constitué par un onduleur à 3 phases avec 6 commutateurs précédé éventuellement, comme illustré, par un dispositif de protection comportant un interrupteur commandé suivi d'un condensateur en parallèle. Les commutateurs formant l'onduleur sont communément des IGBT aux bornes desquels sont montées des diodes antiparallèles et dont la commutation est assurée par le circuit de commande électronique 34.

Le circuit de commande électronique 34 assurant la commande de la matrice de connexion 32 et des deux convertisseurs DC/AC 30, 38 peut être monté dans une unité de commande unique intégrant alors de préférence l'unité de commande 26 ou disposé séparément comme illustré.

Le fonctionnement du système selon l'invention est explicité ci-après. Il dépend des fonctions envisagées et besoins opérationnels de l'hélicoptère, notamment le démarrage de l'APU, la commande des turbomachines ou une injection de puissance complémentaire dans les turbomachines selon qu'il est effectué sur un et/ou deux moteurs électriques à piloter en même temps. Par exemple, on peut citer le cas où l'injection de puissance sur la BTP est effectuée avec un seul moteur électrique ou sur une seule turbomachine à la fois (par exemple pour « booster » une turbomachine en cas de perte de l'autre) mais avec la capacité d'alimenter l'une ou l'autre des turbomachines avec la même électronique de puissance. On peut citer aussi le cas de deux moteurs électriques montés chacun sur un générateur de gaz de turbomachine ou encore deux moteurs montés sur la turbine libre ou sur la BTP.

De manière plus détaillée, la structure de l'invention à base d'un pont redresseur, de deux onduleurs et d'un ensemble de contacteurs permet de gérer ces différentes fonctions très simplement comme suit (le mode de réalisation préférentiel est commenté en rapport avec la commande des deux moteurs des générateurs de gaz mais, bien entendu, il trouve application à la commande d'un moteur unique de la BTP par exemple):
Pour le démarrage de l'APU à partir d'une basse tension (typiquement 28 Vdc) délivrée par la batterie 20, le contacteur 24 étant fermé, le second convertisseur DC/AC 38 est utilisé en redresseur actif (survolteur triphasé) pour obtenir une tension Vdc de l'ordre de 270Vdc (les contacteurs 320 et 322 étant alors fermés), le premier convertisseur DC/AC 30 pilotant le démarreur/générateur 18 de l'APU à partir de cette tension continue Vdc via les contacteurs 324, 326 alors fermés, le contacteur 22 et les contacteurs 328, 330 et 332 étant ouverts.

Une fois l'APU démarré, le démarrage des turbomachines à partir de la tension réseau 115 Vac fournie par le S/G 18 de l'APU peut être effectué à son tour. Cette tension, une fois le contacteur 22 fermé, est fournie au circuit de redressement non commandé 36 qui délivre la tension Vdc redressée et filtrée, les deux convertisseurs DC/AC 30, 382 pilotant chacun, au travers des contacteurs en série 324, 330 et 322, 332 respectivement, un moteur électrique 12C, 14C permettant le démarrage simultané (si nécessaire) des deux turbomachines, les contacteurs 24, 320, 326 et 328 étant alors ouverts.

On notera que le démarrage des turbomachines peut aussi s'effectuer à partir de la basse tension issue de la batterie 20 de façon similaire au démarrage de l'APU. En pratique, il convient de démarrer l'une des deux turbomachines en fermant par exemple le contacteur 330 pour alimenter le moteur électrique 12C au lieu de celui référencé 326 alimentant préalablement le S/G 18. Puis, la première turbomachine étant démarrée, son moteur électrique peut être utilisé en générateur pour fournir l'énergie nécessaire au démarrage de la seconde turbomachine en fermant alors les contacteurs 322 et 332, les contacteurs 24 et 320 étant en même temps ouverts. Ceci permet en outre de se passer totalement d'une source alternative (via l'APU ou tout autre générateur) pour permettre le démarrage des turbomachines.

Une fois une des turbomachines démarrées (et quels que soient les états précédents), une puissance supplémentaire peut être injectée dans une des turbomachines à partir du S/G 18 fonctionnant en générateur, soit de manière transitoire soit de manière permanente. Ainsi, en fermant le contacteur 22, le S/G 18 alimente le circuit de redressement non commandé 36 pour créer la tension Vdc utilisée par chaque convertisseur DC/AC 30, 382 pour piloter via leurs contacteurs en série respectifs 324, 330 et 322, 332 le moteur électrique 12C, 14C associé à chaque générateur de gaz. Pour obtenir une injection d'une puissance plus élevée dans une turbomachine, on peut soit utiliser les deux convertisseurs DC/AC en parallèles (par exemple pour le moteur 12C, contacteurs 22, 324, 330, 322, 328 en position fermée et contacteurs 24, 320, 326, 332 en position ouvert) soit permettre une meilleure disponibilité de l'injection de puissance en utilisant l'un ou l'autre en cas de pannes de l'un des deux (les contacteurs 322 et 324 permettant en outre une isolation complète de l'un des convertisseurs DC/AC dans ce cas, le contacteur 328 permettant la substitution de l'un par l'autre).

On notera que l'utilisation de contacteurs monophasés (en lieu et place des triphasés illustrés) pourrait permettre des modes dégradés supplémentaires, augmentant ainsi si nécessaire la disponibilité des fonctions visées.

Avec l'invention, la mutualisation des organes électroniques de puissance permet de réaliser un système de commande et d'alimentation électrique multifonction et notamment, avec un même onduleur, de piloter plusieurs moteurs/générateurs électriques. L'utilisation d'un système commun pour l'unité de commande de démarrage de l'APU et pour les générateurs électriques permet une réduction appréciable de masse, d'encombrement et de coût, en comparaison avec l'utilisation de systèmes d'alimentation respectifs dédiés.

Le système de commande et d'alimentation peut avantageusement être disposé en partie centrale de l'hélicoptère, à proximité de son coeur électrique primaire, ce qui permet d'optimiser l'ensemble de l'architecture électrique.

## Revendications

1. Système de commande et d'alimentation électrique d'au moins un moteur/générateur, couplé à la turbomachine ou à la boite de transmission principale d'un hélicoptère, comprenant un premier convertisseur DC/AC (30) destiné à fournir sélectivement, selon les positions respectives de contacteurs (320, 322, 324, 326, 328, 330, 332) d'une matrice de connexion (32) actionnés depuis un circuit de commande électronique (34), une énergie électrique alternative audit au moins un moteur/générateur, ce premier convertisseur DC/AC étant alimenté en tension continue par un dispositif d'alimentation en tension délivrant une tension continue Vdc et formé soit par un circuit (36) de redressement d'une tension alternative délivrée via un premier contacteur (22) par un démarreur/générateur (18) d'un APU (16) soit par un convertisseur DC/DC élévateur de tension (38) alimenté à partir d'une batterie (20) via un second contacteur (24) et obtenu par la mise en série d'une inductance triphasée (380) et d'un second convertisseur DC/AC (382) via au moins un contacteur (320, 322) de ladite matrice de connexion,
système dans lequel pour permettre, une fois l'un au moins desdits moteurs/générateurs démarrés, une injection de puissance supplémentaire à partir dudit démarreur/générateur de l'APU, ladite matrice de connexion comporte en outre un contacteur (328) pour mettre en parallèle ledit premier convertisseur DC/AC avec ledit second convertisseur DC/AC.

2. Système selon la revendication 1, **caractérisé en ce que** ladite matrice de connexion comporte au moins un contacteur (324, 330) pour relier ledit premier convertisseur DC/AC à un premier moteur/générateur (12C) et au moins un contacteur (322, 332) pour relier ledit second convertisseur DC/AC à un second moteur/générateur (14C).

3. Système selon la revendication 2, **caractérisé en ce que** ladite matrice de connexion comporte en outre au moins un contacteur (320, 326) pour relier ledit premier convertisseur DC/AC au dit démarreur/générateur afin de permettre un démarrage de l'APU à partir de ladite batterie.

4. Système selon la revendication 1, **caractérisé en ce que** ladite matrice de connexion comporte sept contacteurs, les troisième (320) et quatrième (322) contacteurs étant montés entre ladite inductance triphasée (380) et ledit second convertisseur DC/AC (382), les cinquième (324) et sixième (326) contacteurs étant montés entre ledit premier convertisseur DC/AC (30) et ledit démarreur/générateur (18) de l'APU, le septième (328) étant ledit contacteur pour mettre en parallèle ledit premier convertisseur DC/AC avec ledit second convertisseur DC/AC, le huitième (330) étant monté entre ledit cinquième contacteur (324) et un premier moteur/générateur d'hélicoptère (12) et le neuvième (332) étant monté entre ledit quatrième contacteur (322) et un second moteur/générateur d'hélicoptère (14).

## Patentansprüche

1. System zur Steuerung und Stromversorgung wenigstens eines Motor/Generators, gekoppelt mit dem Turbomaschine oder mit dem Hauptgetriebe eines Hubschraubers, umfassend einen ersten DC/AC-Wandler (30), welcher dazu bestimmt ist, entsprechend den jeweiligen Positionen von Schützen (320, 322, 324, 326, 328, 330, 332) einer Verbindungsmatrix (32), die von einem elektronischen Steuerkreis (34) aus betätigt werden, dem wenigstens einen Motor/Generator einen Wechselstrom selektiv zu liefern, wobei dieser erste DC/AC-Wandler über eine Spannungsversorgungseinrichtung, die eine Gleichspannung Vdc liefert und entweder durch eine Schaltung (36) zum Gleichrichten einer Wechselspannung, welche über einen ersten Schütz (22) durch einen Starter/Generator (18) einer APU (16) geliefert wird, oder durch einen spannungserhöhenden DC/DC-Wandler (38), welcher von einer Batterie (20) über einen zweiten Schütz (24) versorgt und durch das In-Reihe-schalten einer Dreiphasen-Induktivität (380) und eines zweiten DC/AC-Wandlers (382) über wenigstens einen Schütz (320, 322) der Verbindungsmatrix erhalten wird, gebildet ist, mit Gleichspannung versorgt wird,
System, bei dem, zur Ermöglichung eines Einspeisens von zusätzlicher Leistung von dem Starter/Generator der APU aus, sobald wenigstens einer der Motor/Generatoren gestartet ist, die Verbindungsmatrix ferner einen Schütz (328) umfasst, um den ersten DC/AC-Wandler mit dem zweiten DC/AC-Wandler parallel zu schalten.

2. System nach Anspruch 1, **dadurch gekennzeichnet, dass** die Verbindungsmatrix wenigstens einen Schütz (324, 330) umfasst, um den ersten DC/AC-Wandler mit einem ersten Motor/Generator (12C) zu verbinden, sowie wenigstens einen Schütz (322, 332), um den zweiten DC/AC-Wandler mit einem zweiten Motor/Generator (14C) zu verbinden.

3. System nach Anspruch 2, **dadurch gekennzeichnet, dass** die Verbindungsmatrix ferner wenigstens einen Schütz (320, 326) umfasst, um den ersten DC/AC-Wandler mit dem Starter/Generator zu verbinden, um ein Starten der APU anhand der Batterie zu ermöglichen.

4. System nach Anspruch 1, **dadurch gekennzeichnet, dass** die Verbindungsmatrix sieben Schütze umfasst, wobei der dritte (320) und der vierte (322) Schütz zwischen die Dreiphasen-Induktivität (380) und den zweiten DC/AC-Wandler (382) geschaltet sind, wobei der fünfte (324) und der sechste (326) Schütz zwischen den ersten DC/AC-Wandler (30) und den Starter/Generator (18) der APU geschaltet sind, wobei der siebte (328)Schütz ist, um den ersten DC/AC-Wandler mit dem zweiten DC/AC-Wandler parallel zu schalten, wobei der achte (330) zwischen den fünften Schütz (324) und einen ersten Hubschrauber-Motor/Generator (12) geschaltet ist, und der neunte (332) zwischen den vierten Schütz (322) und einen zweiten Hubschrauber-Motor/Generator (14) geschaltet ist.

## Claims

1. An electrical control and power supply system for at least one helicopter motor/generator connected with the turbomachine or the main gearbox of an helicopter, the system comprising a first DC/AC converter (30) for selectively delivering AC electrical power to said at least one motor/generator, depending on the respective positions of contactors (320, 322, 324, 326, 328, 330, 332) of a connection matrix (32) actuated from an electronic control circuit (34), the first DC/AC converter being powered with DC by a DC power supply device that is formed either by a circuit (36) for rectifying an AC voltage delivered via a first contactor (22) by a starter/generator (18) of an APU (16), or else by a voltage booster DC/DC converter (38) powered from a battery (20) via a contactor (24) and obtained by connecting in series a three-phase inductor (380) and a second DC/AC converter (382) via at least one contactor (320, 322) of said connection matrix, system in which so as to make it possible, once at least one of said motors/generators has started, to inject additional power from said starter/generator of the APU, said connection matrix further includes a contactor (328) for connecting said first DC/AC converter in parallel with said second DC/AC converter.

2. A system according to claim 1, **characterized in that** said connection matrix includes at least one contactor (324, 330) for connecting said first DC/AC converter to a first motor/generator (12C) and at least one contactor (322, 332) for connecting said second DC/AC converter to a second motor/generator (14C).

3. A system according to claim 2, **characterized in that** said connection matrix further comprises at least one contactor (320, 326) for connecting said first DC/AC converter to said starter/generator in order to enable the APU to be started from said battery.

4. A system according to claim 1, **characterized in that** said connection matrix comprises seven contactors, the third (320) and fourth (322) contactors being disposed between said three-phase inductor (380) and said second DC/AC converter (382), the fifth (324) and sixth (326) contactors being disposed between said first DC/AC converter (30) and said starter/generator (18) of the APU, the seventh (328) being said contactor for connecting said first DC/AC converter in parallel with said second DC/AC converter, the eighth (330) being disposed between said fifth contactor (324) and a first helicopter motor/generator (12) and the ninth (322) being disposed between the fourth contactor (322) and a second helicopter motor/generator (14).
